# EUROPEAN PATENT APPLICATION

(11) **EP 2 333 715 A1**
(43) Date of publication of application: **15.06.2011**
(21) Application number: 09809599.5
(22) Date of filing: 28.08.2009
(51) Int. Cl.: G06Q 50/00, G06K 17/00

(54) **DISPLAY SUPPORT SYSTEM**

(30) Priority: 28.08.2008 JP 2008219033
(71) Applicant: Japan Tobacco, Inc., Tokyo 105-8422 (JP)
(72) Inventor: OIKAWA, Ayumu, Tokyo 105-8422 (JP)
(74) Representative: HOFFMANN EITLE
(86) International application number: PCT/JP2009/004220
(87) International publication number: WO 2010/023944

(57) **Abstract**

Provided is a display support system which helps a display staff of a commodity supply company to simply and correctly display specific display commodities at specific commodity display positions.

If commodity identification data TID, which is acquired when the display staff displays pack of cigarettes TP and so forth on a cigarette display apparatus 1000, is held together with a commodity display alert TDA, a portable processing terminal 2200 outputs the commodity display alert TDA. Accordingly, it is possible, for example, to alert the packs of cigarettes TP or the like, which should be displayed at the center top position of the cigarette display apparatus 1000, when the display staff is going to display the packs of cigarettes TP or the like on the cigarette display apparatus 1000. Propriety of a commodity display layout PDF judged by the back-end is notified during the working time to the job site where the cigarette display apparatus 1000 is placed, and can be reflected thereto.

## Description

### TECHNICAL FIELD

The present invention relates to a display support system that includes a commodity display apparatus that displays display commodities to be sold to end users at a commodity-selling shop, a data management apparatus that manages, at a back-end such as a commodity supply company, data of the display commodities which are supplied to the commodity-selling shop, and a portable processing terminal that is carried by a display staff who moves between the back-end and the commodity-selling shop, and is used for collecting data relevant to a commodity display layout on the commodity display apparatus, and for data registration to the data management apparatus; the data management apparatus; and the portable processing terminal; and a computer program and a data processing method thereof

### BACKGROUND ART

At present at commodity-selling shops such as so-called convenience stores, a vast variety of display commodities are displayed and sold, relative to their sales floor size. The display commodities include those freely displayed at the commodity-selling shops, and those displayed by instructions of the back-end such as commodity supply companies.

For example, as for packs of cigarettes, purchasers of which are limited to adults, advertisements of which are controlled, commodity display apparatuses such as those called store fixtures or commodity racks are provided for the purpose of exclusive use of displaying packs of cigarettes by commodity supply companies to commodity-selling shops, and even a commodity display layout using the commodity display apparatuses at the commodity-selling shops are directed by the commodity supply companies.

Accordingly, a display support system for supporting the foregoing display layout of the display commodities, for example, includes a commodity display apparatus that displays display commodities to be sold to end users at a commodity-selling shop; a data management apparatus that manages, at a back-end such as a commodity supply company, data of the display commodities which are supplied to the commodity-selling shop; and a portable processing terminal that is carried by a display staff who moves between the back-end and the commodity-selling shop, and is used for collecting data relevant to a commodity display layout on the commodity display apparatus, and for data registration to the data management apparatus.

In this situation, in some cases, a shop clerk at the commodity-selling shop may display the display commodities as described in the above, but as for commodities such as packs of cigarettes, a display staff sent from the commodity supply company may display the commodities.

Accordingly, an authorized display staff brings the packs of cigarettes, cartons of cigarettes, brick packs of cigarettes and so forth, displays them on the commodity display apparatus, and registers the data relevant to the commodity display layout to the portable processing terminal.

After completion of the display of commodities such as the packs of cigarettes and the data registration to the portable processing terminal as described in the above, the display staff goes from the commodity-selling shop back to his or her commodity supply company. The display staff then sends the data relevant to the commodity display layout from the portable processing terminal to the data management apparatus for registration. Since the data management apparatus is typically configured to output the commodity display layout on a screen, so that the display staff may examine the propriety.

At present, there are various known proposals aimed at embodying efficient space management system, typically by using so-called RFID chip (see Patent Documents 1 to 3, for example).

### [Prior Art Documents]

### [Patent Documents]

[Patent Document 1] Japanese Laid-Open Patent Publication No. 2006-023788
[Patent Document 2] Japanese Laid-Open Patent Publication No. 2004-280414
[Patent Document 3] Japanese Laid-Open Patent Publication No. 2005-092376

### DISCLOSURE OF THE INVENTION

### [Problems to be Solved by the Invention]

However, the conventional display support system allows the display staff only to collect data of an actual commodity display layout using the portable processing terminal and to make the data management apparatus at the commodity supply company manage the data, as described in the above.

For this reason, even if a management staff of the data management apparatus examines improvement in the commodity display layout and notifies them to the display staff, it may be difficult to exactly reflect the improvement in the display operation also for the next time.

The present invention was devised in view of the above-described problems, and is aimed at providing a display support system which helps a display staff of a commodity supply company to simply and correctly display specific display commodities at specific commodity display positions when the display staff displays the display commodities on a commodity display apparatus at a commodity-selling shop.

### [Means for Solving the Problems]

A display support system corresponding to the present invention includes a commodity display apparatus that displays display commodities to be sold to end users at a commodity-selling shop; a data management apparatus that manages, at a back-end such as a commodity supply company, data of the display commodities which are supplied to the commodity-selling shop; and a portable processing terminal that is carried by a display staff who moves between the back-end and the commodity-selling shop, and is used for collecting data relevant to a commodity display layout on the commodity display apparatus, and for data registration to the data management apparatus. The display commodities are assigned, at least for every type of commodity, with commodity identification data which is managed by the data management apparatus and acquired through the portable processing terminal. The commodity display apparatus is assigned, for every position thereof where the display commodities are displayed, with position identification data which is acquired through the portable processing terminal. The portable processing terminal includes an identification acquisition unit that acquires, when the display staff displays the display commodities on the commodity display apparatus, correspondent commodity identification data and position identification data; and a display holding unit that holds the acquired commodity identification data and the acquired position identification data in a correlated manner. The data management apparatus includes a display acquisition unit that acquires the commodity identification data and the position identification data, which are collected from the commodity display apparatus, through the portable processing terminal; an alert memory unit that stores a commodity display alert relevant to a commodity display layout, together with at least a part of the commodity identification data; and an alert provision unit that provides the commodity display alert to the portable processing terminal, through which the commodity identification data and the position identification data are acquired, together with the commodity identification data. The portable processing terminal further includes an alert acquisition unit that acquires the commodity display alert, together with the commodity identification data, from the data management apparatus; an alert holding unit that stores the acquired commodity display alert together with the commodity identification data; an alert confirmation unit that confirms whether the commodity identification data, acquired together with the position identification data when the display staff displays the display commodities on the commodity display apparatus, matches the commodity identification data stored together with the commodity display alert; and an alert notifying unit that outputs a predetermined commodity display alert if both of the commodity identification data match.

According to the display support system of the present invention, the commodity display apparatus displays the display commodities to be sold to the end users at the commodity-selling shop. The data management apparatus manages data of the display commodities which are provided to the commodity-selling shop, at the back-end such as the commodity supply company or the like. The portable processing terminal carried by the display staff who moves between the back-end and the commodity-selling shop is typically used for collecting data relevant to a commodity display layout on the commodity display apparatus, and for data registration to the data management apparatus.

The commodity identification data, which is managed by the data management apparatus and acquired through the portable processing terminal, is assigned to the display commodities at least for every type of commodity. The position identification data, which is acquired through the portable processing terminal, is assigned to the commodity display apparatus, for every position thereof where the display commodities are displayed.

When the display staff displays the display commodities on the commodity display apparatus, the identification acquisition unit of the portable processing terminal acquires correspondent commodity identification data and the position identification data, and the display holding unit holds the thus-acquired commodity identification data and the thus-acquired position identification data in a correlated manner.

The display acquisition unit of the data management apparatus acquires the commodity identification data and the position identification data, collected from the commodity display apparatus as described in the above, through the portable processing terminal. The alert memory unit of the data management apparatus stores the commodity display alert relevant to a commodity display layout, together with at least a part of commodity identification data. Then the alert provision unit of the data management apparatus provides the commodity display alert together with the commodity identification data, to the portable processing terminal through which the commodity identification data and the position identification data are acquired.

In this process, the alert acquisition unit of the portable processing terminal acquires the commodity display alert together with the commodity identification data from the data management apparatus, and the alert holding unit holds the thus-acquired commodity display alert together with the commodity identification data. The alert confirmation unit of the portable processing terminal confirms whether the commodity identification data, acquired together with the position identification data when the display staff displays the display commodities on the commodity display apparatus, matches the commodity identification data held together with the commodity display alert. If both of the commodity identification data match, the alert notifying unit of the portable processing terminal outputs a predetermined commodity display alert.

Accordingly, when the display staff displays the display commodities on the commodity display apparatus, correlation data between the commodity identification data and the position identification data are collected by the portable processing terminal, and provided to the data management apparatus. Accordingly, the data management apparatus is capable of confirming and examining the commodity display layout on the commodity display apparatus.

When the correlation data between the commodity identification data and the position identification data is provided from the portable processing terminal to the data management apparatus as described in the above, the commodity display alert is provided together with at least a part of commodity identification data from the data management apparatus to the portable processing terminal. By allowing the portable processing terminal to acquire the position identification data together with the commodity identification data in this configuration, when display staff displays the display commodities on the commodity display apparatus, the commodity display alert is output for notification depending on the commodity identification data.

Accordingly, since the commodity display alert is output with respect to a specific commodity identification data, when the data relevant to a commodity display layout is collected by the portable processing terminal similarly to the conventional way, it is possible, for example, to alert the display commodities which should be displayed at the center top position of the commodity display apparatus. The commodity display alert is provided from the data management apparatus to the portable processing terminal, when the data relevant to a commodity display layout, collected by the portable processing terminal, is provided to the data management apparatus similarly to the conventional way.

In the above-described display support system, the alert memory unit of the data management apparatus may store at least a part of the commodity display alert together with the commodity identification data and the position identification data; the alert provision unit may provide at least a part of the commodity display alert to the portable processing terminal together with the commodity identification data and the position identification data; the alert holding unit of the portable processing terminal may hold the acquired commodity display alert together with the commodity identification data and the position identification data; the alert confirmation unit may confirm whether the acquired position identification data and the acquired commodity identification data match the position identification data and the commodity identification data held together with the commodity display alert; and the alert notifying unit may output the commodity display alert if both of the position identification data and the commodity identification data match.

In the above-described display support system, the commodity display apparatus may be assigned with apparatus identification data for every apparatus type which differs at least in the commodity display layout; the identification acquisition unit of the portable processing terminal may acquire, for every apparatus identification data, correspondent commodity identification data and position identification data; the display holding unit may hold, for every apparatus identification data, the acquired commodity identification data and the acquired position identification data in a correlated manner; the display acquisition unit of the data management apparatus may acquire the collected commodity identification data and the collected position identification data from the portable processing terminal; the alert memory unit may store, for every apparatus identification data, the commodity display alert together with the commodity identification data and the position identification data; the alert provision unit may provide, for every apparatus identification data, at least a part of the commodity display alert to the portable processing terminal, together with the commodity identification data and the position identification data; the alert holding unit of the portable processing terminal may hold, for every apparatus identification data, the acquired commodity display alert together with the commodity identification data and the position identification data; the alert confirmation unit may confirm whether the acquired apparatus identification data and the position identification data and the commodity identification data match the apparatus identification data and the position identification data and the commodity identification data which are held together with the commodity display alert; and the alert notifying unit may output the commodity display alert if all of the apparatus identification data and the position identification data and the commodity identification data match.

In the above-described display support system, the portable processing terminal may further include a confirmation notifying unit that outputs an acquisition confirmation sound when the commodity identification data and the position identification data are acquired by the identification acquisition unit, and the alert notifying unit may modify the acquisition confirmation sound as the commodity display alert.

In the above-described display support system, the data management apparatus may further include a display generation unit that generates data relevant to the commodity display layout from the commodity identification data and the position identification data which are collected from the commodity display apparatus; and a display layout outputting unit that outputs the commodity display layout based on the generated data on a screen.

In the above-described display support system, the data management apparatus may further include a sales acquisition unit that acquires commodity sales data for every commodity identification data; and a sales reflection unit that reflects the acquired commodity sales data in the commodity display layout to be output on a screen.

In the above-described display support system, data management apparatus may further include an alert entering unit through which the commodity display alert is entered for every display commodity of the commodity display layout to be output on a screen with the commodity sales data reflected therein, and the alert memory unit may store the entered commodity display alert together with correspondent commodity identification data.

In the above-described display support system, the data management apparatus may further include an alert generation unit that generates the commodity display alert for at least every part of the commodity identification data corresponding to the commodity display layout to be output on a screen with the commodity sales data reflected therein, and the alert memory unit may store the generated commodity display alert together with the commodity identification data.

In the above-described display support system, each of the display commodities may be mounted with an RFID chip storing the commodity identification data, the commodity display apparatus may be mounted with an RFID chip, storing the position identification data, for every commodity display position, and the portable processing terminal may include, as the identification acquisition unit, an RFID reader which acquires the commodity identification data and the position identification data from the RFID chips mounted on the display commodities and the commodity display apparatus.

A portable processing terminal of the present invention is a portable processing terminal for the display support system of the present invention, and includes an identification acquisition unit that acquires correspondent commodity identification data and position identification data when the display staff displays the display commodities on the commodity display apparatus; a display holding unit that holds the acquired commodity identification data and the acquired position identification data in a correlated manner; an alert acquisition unit that acquires the commodity display alert, together with the commodity identification data, from the data management apparatus; an alert holding unit that stores the acquired commodity display alert together with the commodity identification data; an alert confirmation unit that confirms whether the commodity identification data, acquired together with the position identification data when the display staff displays the display commodities on the commodity display apparatus, matches the commodity identification data stored together with the commodity display alert; and an alert notifying unit that outputs a predetermined commodity display alert if both of the commodity identification data match.

A data management apparatus of the present invention is a data management apparatus for the display support system of the present invention, and includes a display acquisition unit that acquires the commodity identification data and the position identification data, which are collected from the commodity display apparatus, through the portable processing terminal; an alert memory unit that stores a commodity display alert relevant to a commodity display layout, together with at least a part of the commodity identification data; and an alert provision unit that provides the commodity display alert to the portable processing terminal, through which the commodity identification data and the position identification data are acquired, together with the commodity identification data.

A first computer program of the present invention is a computer program of the portable processing terminal of the present invention, and makes the portable processing terminal execute an identification acquisition process for acquiring, when the display staff displays display commodities on the commodity display apparatus, correspondent commodity identification data and position identification data; a display holding process for holding the acquired commodity identification data and the acquired position identification data in a correlated manner; an alert acquisition process for acquiring the commodity display alert, together with the commodity identification data, from the data management apparatus; an alert holding process for holding the acquired commodity display alert together with the commodity identification data; an alert confirmation process for confirming whether the commodity identification data, acquired together with the position identification data when the display staff displays the display commodities on the commodity display apparatus, matches the commodity identification data stored together with the commodity display alert; and an alert notifying process for outputting a predetermined commodity display alert if both of the commodity identification data match.

A second computer program of the present invention is a computer program of the data management apparatus of the present invention, and makes the data management apparatus execute a display acquisition process for acquiring the commodity identification data and the position identification data, which are collected from the commodity display apparatus, through the portable processing terminal; an alert memory process for storing a commodity display alert relevant to a commodity display layout, together with at least a part of the commodity identification data; and an alert provision process for providing the commodity display alert to the portable processing terminal, through which the commodity identification data and the position identification data are acquired, together with the commodity identification data.

A first data processing method of the present invention is a data processing method of the portable processing terminal of the present invention, and includes an identification acquisition operation for acquiring, when the display staff displays display commodities on the commodity display apparatus, correspondent commodity identification data and position identification data; a display holding operation for holding the acquired commodity identification data and the acquired position identification data in a correlated manner; an alert acquisition operation for acquiring the commodity display alert, together with the commodity identification data, from the data management apparatus; an alert holding operation for holding the acquired commodity display alert together with the commodity identification data; an alert confirmation operation for confirming whether the commodity identification data, acquired together with the position identification data when the display staff displays the display commodities on the commodity display apparatus, matches the commodity identification data stored together with the commodity display alert; and an alert notifying operation for outputting a predetermined commodity display alert if both of the commodity identification data match.

A second data processing method of the present invention is a data processing method of the data management apparatus of the present invention, and includes a display acquisition operation for acquiring the commodity identification data and the position identification data, which are collected from the commodity display apparatus, through the portable processing terminal; an alert memory operation for storing a commodity display alert relevant to a commodity display layout, together with at least a part of the commodity identification data; and an alert provision operation for providing the commodity display alert to the portable processing terminal, through which the commodity identification data and the position identification data are acquired, together with the commodity identification data.

Note that individual constituents of the present invention may be enough if they are configured to embody the functions thereof, and may typically be embodied as a dedicated hardware for expressing predetermined functions, a data management apparatus having a predetermined function given by a computer program, a predetermined function embodied on a data management apparatus by a computer program, and arbitrary combinations of them.

The individual constituents of the present invention may not necessarily be entities independent of each other, and instead a plurality of constituents may be built up into a single component, a single constituent may be built up by a plurality of components, a certain constituent may form a part of other constituents, and a part of certain constituent and a part of other constituent may overlap.

While the computer program and the data processing method of the present invention sequentially describe a plurality of processes and operations, the order of description is by no means limit the order of execution of the plurality of processes and operations.

Accordingly, when the computer program and the data processing method of the present invention are executed, the order of execution of the plurality of processes and operations may be modified so far as the substance thereof may not adversely be affected.

The computer program and the data processing method of the present invention are not limited to those in which the plurality of processes and operations are sequentially executed without being overlapped. For example, a certain process and operation may occur during execution of other process and operation, and a part or all of execution time of a certain process and operation may overlap execution time of other process and operation.

### [Effect of the Invention]

According to the display support system of the present invention, when the display staff displays the display commodities on the commodity display apparatus, data relevant to correlation between the commodity identification data and the position identification data is collected by the portable processing terminal, and the data is provided to data management apparatus. Accordingly, the data management apparatus can confirm and examine the commodity display layout on the commodity display apparatus. Therefor, for example, it is enabled to set the commodity display alert to the commodity identification data of the display commodities of which the display layout was judged as inappropriate. Upon judgment, when the data relevant to the commodity display layout is provided from the portable processing terminal to the data management apparatus, the commodity display alert is provided from the data management apparatus to the portable processing terminal, together with at least a part of commodity identification data. In this situation, if the commodity identification data is acquired by the portable processing terminal together with the position identification data, the commodity display alert may be output depending on the commodity identification data. Accordingly, since the commodity display alert is output to a specified commodity identification data when the data relevant to the commodity display layout is collected by the portable processing terminal similarly to the conventional way, it is possible, for example, to alert the display commodities which should be displayed at the center top position of the commodity display apparatus. Accordingly, propriety of the commodity display layout judged by the back-end is notified during the working time to the job site where the commodity display apparatus is placed, and can be reflected thereto. The commodity display alert is provided from the data management apparatus to the portable processing terminal, when the data relevant to a commodity display layout, collected by the portable processing terminal, is provided to the data management apparatus, similarly to the conventional way. Accordingly, any dedicated operation for registering the commodity display alert from the data management apparatus to the portable processing terminal is no more necessary, and thereby the always latest commodity display alert may automatically be registered in the portable processing terminal without making the display staff conscious.

### BRIEF DESCRIPTION OF THE DRAWINGS

The above-mentioned objects, objects other than them, features, and advantages will become more apparent by the accompanying drawings and the following preferred exemplary embodiments.

Fig. 1 is a schematic block diagram illustrating a logical structure of a display support system according to an embodiment of the present invention;
FIG. 2 is a block diagram illustrating a physical structure of a data management apparatus;
FIG. 3 is a block diagram illustrating a physical structure of a portable processing terminal;
FIG. 4 is a perspective view illustrating an appearance of a cigarette display apparatus corresponding to a commodity display apparatus;
FIG. 5 is an exploded perspective view illustrating a structure of an essential portion of the cigarette display apparatus;
FIG. 6 is a schematic front elevation illustrating a screen of the data management apparatus on which the front view image of the cigarette display apparatus is output;
FIG. 7 is a schematic front elevation illustrating an output image of the commodity display layout containing a front view image of the apparatus and front faces of the packs arranged thereon;
FIG. 8 is a flow chart illustrating a data processing method of the portable processing terminal in a display registering mode;
FIG. 9(A) is a flow chart illustrating a data processing method of the portable processing terminal in a data exchange mode to the data management apparatus, and FIG. 9(B) is a flow chart illustrating a data processing method of the data management apparatus in a data exchange mode to the portable processing terminal; and
FIG. 10 is a schematic front elevation illustrating an output image of the commodity display layout with the commodity sales data reflected therein in the data management apparatus according to a modified example.

### MODE FOR CARRYING OUT THE INVENTION

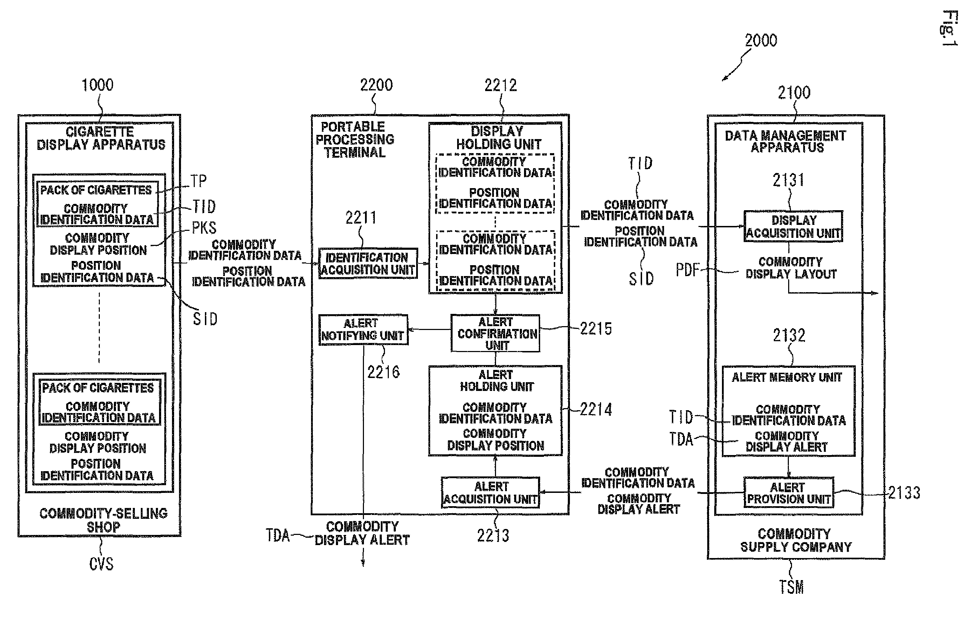

An embodiment of the present invention will be described with reference to the accompanying drawings. As illustrated in FIG. 1, a display support system 2000 of this embodiment, details of which will be described later, has a cigarette display apparatus 1000 which is a commodity display apparatus which displays packs of cigarettes TP, cartons of cigarettes TK, brick packs of cigarettes BP and so forth, which are commodities to be sold to end users at a commodity-selling shop CVS; a data management apparatus 2100 which manages, typically at a back-end such as a commodity supply company TSM, data of a pack of cigarettes TP and so forth provided to the commodity-selling shop CVS; and a portable processing terminal 2200 which is carried by a display staff who moves between the back-end and the commodity-selling shop CVS, and is typically used for collecting data relevant to a commodity display layout PDF on the cigarette display apparatus 1000, and for data registration to the data management apparatus 2000.

In the display support system 2000 of this embodiment, the packs of cigarettes TP and so forth are assigned, for at least every type of commodity, with commodity identification data TID which is managed by the data management apparatus 2100 and acquired through the portable processing terminal 2200, typically in a form of barcode image and so on.

Similarly, the cigarette display apparatus 1000 is assigned, for every commodity display position PKS thereof where the packs of cigarettes TP and so forth are displayed, with position identification data SID which is acquired through the portable processing terminal 2200, typically in a form of barcode image and so on.

Note that the position identification data SID configured by such barcode image may typically be given on a price card attached to the front face of the cigarette display apparatus 1000, or on a card holder used therefor (not illustrated).

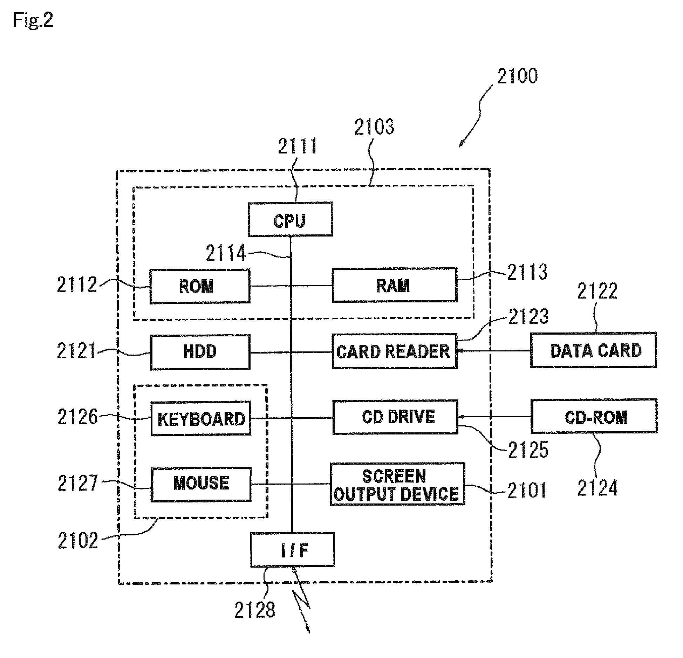

The data management apparatus 2100 is typically configured by a database server and so on which is installed at the back-end of the commodity supply company TSM or the like, as described in the above. The data management apparatus 2100 includes, as illustrated in FIG. 2, a screen output device 2101 which outputs various data on a screen, an input device 2102 which accepts various input operation, a computer unit 2103 which executes various data processing and the like, as hardware.

For more details, the computer unit 2103 has a CPU (Central Processing Unit) 2111 which executes various data processing, a ROM (Read Only Memory) 2112 which stores various data in a fixed manner, a RAM (Random Access Memory) 2113 which temporarily stores various data, and so on. All of which are connected via a bus line 2114.

To the bus line 2114, hardware including an HDD (Hard Disc Drive) 2121 which stores a larger amount of various data, a card reader 2123 to which a data card 2122 is inserted in a freely detachable manner, a CD drive 2125 to which a CD (Compact Disc)-ROM 2124 is inserted in a freely detachable manner, a keyboard 2126 corresponding to an input device 2102, a mouse 2127 corresponding to an input device 2102, a screen output device 2101 typically composed of an LCD (Liquid Crystal Display) and so forth, and an I/F (Interface) unit 2128, are connected.

In the data management apparatus 2100 of this embodiment, the ROM 2112, the RAM 2113, the HDD 2121, the freely detachable data card 2122, the freely detachable CD-ROM 2124 and so forth correspond to the data storage media, at least one of these stores various computer programs to be executed by the CPU 2111, as detailed later.

In correspondence with the computer programs and data input through the input devices 2102, the data management apparatus 2100 executes various data processing such as generation of images on the screen output device 2101.

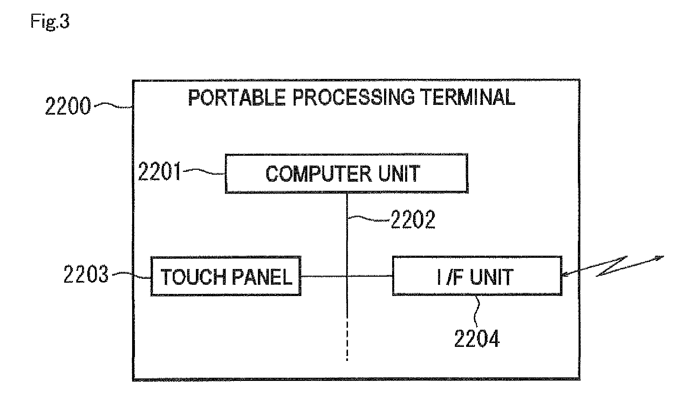

On the other hand, as illustrated in FIG. 3, the portable processing terminal 2200 is configured by hardware including a computer unit 2201, a bus line 2202, a touch panel 2203 used both as a screen output device and an input device, an I/F unit 2204, and so on.

The I/F unit 2204 of the portable processing terminal 2200 is typically configured by an infrared transmitter and a receiver, and is configured to bi-directionally communicate with the I/F unit 2128 of the data management apparatus 2100.

Moreover, the I/F unit 2204 of the portable processing terminal 2200 optically scans a barcode image representing the commodity identification data TID of the packs of cigarettes TP and so forth, and a barcode image representing the position identification data SID of the commodity display position PKS on the cigarette display apparatus 1000.

This sort of portable processing terminal 2200 is provided in a form of dedicated product as a so-called handy terminal. It may alternatively be embodied by installing an appropriate application program on a so-called, multi-functional mobile phone terminal or PDA (Personal Digital Assistance).

Also in the portable processing terminal 2200, an appropriate computer program is stored as a firmware and so on in the computer unit 2201, so that various functions are logically embodied by executing various operations corresponding to the computer program, again as detailed later.

The portable processing terminal 2200 logically includes, as the various functions corresponded to the computer program as described in the above, an identification acquisition unit 2211 which acquires correspondent commodity identification data TID and position identification data SID when the display staff displays the packs of cigarettes TP or the like on the cigarette display apparatus 1000; and a display holding unit 2212 which holds the acquired commodity identification data TID and the acquired position identification data SID in a correlated manner, as illustrated in FIG. 1.

The data management apparatus 2100 has, as the various functions corresponded to the computer program as described in the above, a display acquisition unit 2131 which acquires the commodity identification data TID and the position identification data SID, which are collected from the cigarette display apparatus 1000, through the portable processing terminal 2200; an alert memory unit 2132 which stores a commodity display alert TDA related to a commodity display layout PDF, together with at least a part of the commodity identification data TID; and an alert provision unit 2133 which provides the commodity display alert TDA to the portable processing terminal 2200, through which the commodity identification data TID and the position identification data SID are acquired, together with the commodity identification data TID, as illustrated in FIG. 1.

The portable processing terminal 2200 further logically includes an alert acquisition unit 2213 which acquires the commodity display alert TDA, together with the commodity identification data TID, from the data management apparatus 2100; an alert holding unit 2214 which holds the acquired commodity display alert TDA together with the commodity identification data TID; an alert confirmation unit 2215 which confirms whether the commodity identification data TID, acquired together with the position identification data SID when the display staff displays the packs of cigarettes TP and so forth on the commodity display apparatus 1000, matches the commodity identification data TID stored together with the commodity display alert TDA; and an alert notifying unit 2216 which outputs a predetermined commodity display alert TDA if both of the commodity identification data TID match.

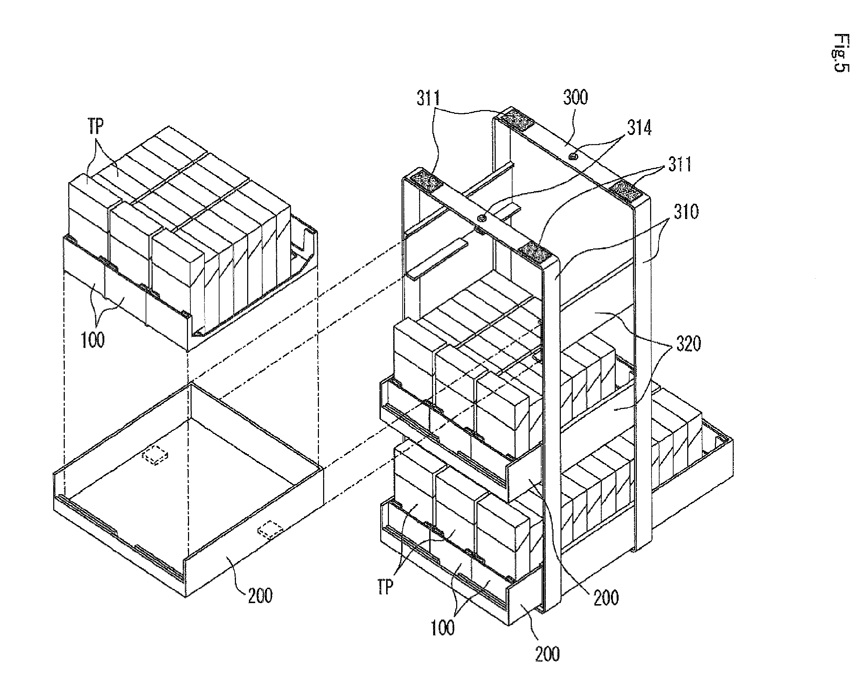

More specifically, cigarette display apparatus 1000, which is configured to simulate the commodity display layout PDF of the packs of cigarettes TP, brick packs of cigarettes BP and cartons of cigarettes TK using the data management apparatus 2100, has a plurality of magazine units 100 each formed in the shape of an open-top box which is elongated in a direction from front to back and each having a shape which allows a plurality of packs of cigarettes TP to be held therein while being arranged in the direction from front to back; a plurality of tray units 200 each formed in the shape of an open-top box and each having a shape which allows the plurality of magazine units 100 arranged in the lateral direction to be held detachably; a plurality of frame units 300 each formed in the shape of an open-front box and each having a shape which allows the plurality of tray units 200 to be held detachably while arranging the tray units vertically apart from each other; and a vertical link mechanism for linking the plurality of frame units 300 in the vertical direction; as illustrated in FIG. 5.

The cigarette display apparatus 1000 displays the packs of cigarettes TP which are the display commodities, the cartons of cigarettes TK which are packed products containing a plurality of packs of cigarettes TP, the brick packs of cigarettes BP which are special version of the packs of cigarettes TP, and so forth.

Each brick pack of cigarettes BP has, for example, a structure which packs a novelty goods such as a portable ashtray together with the pack of cigarettes TP, and may therefore be recognized as a pack of cigarettes TP having a special structure as described in the above. The brick packs of cigarettes BP are provided to the commodity-selling shop CVS, for instance, together with a simple store fixture EF made of cardboard.

At present, the packs of cigarettes TP are formed in a fixed rectangular solid shape, which generally has a common length from front to back and from side to side, whilst heights are not uniform. In this embodiment, it is defined that largest surfaces of the pack of cigarettes TP are a front surface and a back surface, and smallest surfaces are a top surface and a bottom surface.

A brand name and the like are printed on the front surface (and the back surface) of the general pack of cigarettes TP. Therefore, the packs of cigarettes TP are preferably displayed in a suitable condition in direction so that the front faces are located at front. As shown in Fig. 5, the magazine unit 100 accommodates the packs of cigarettes TP, which are facing in the appropriate direction as mentioned above and arranged in a direction from front to back.

The tray unit 200 is also formed in the shape of an open-top box using a colorless, transparent resin. A plurality of magazine units 100 is accommodated in the tray unit 200 while being arranged in a lateral direction.

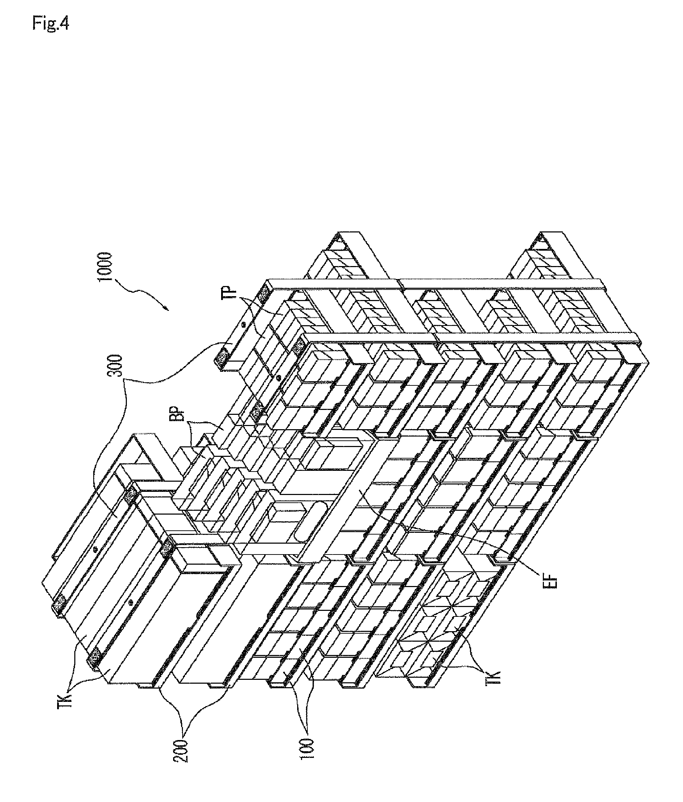

Here, the cigarette display apparatus 1000 of this embodiment includes a tray unit 200 which accommodates five magazine units 100 and has a wide shape, a tray unit 200 which accommodates three magazine units 100 and has a narrow shape, as illustrated in FIG. 4.

As illustrated in FIG. 5, the frame unit 300 includes a pair of main frames 310 and a plurality of support frames 320. Each of the main frames 310 is made of a metal plate which is bent so that a front shape becomes a rectangular. A pair of the main frames 310 is arranged in a direction from front to back.

Each of the support frames 320 is made of a metal plate which is formed in a rail shape elongated in a direction from front to back for supporting the tray unit 200, and a plurality of support frames 320 are arranged in the vertical direction and joined to an inner surface of the pair of the main frames 310.

However, as mentioned above, there are two types of lateral widths in the tray units 200. Therefore, as shown in FIG. 4, the cigarette display apparatus 1000 of this embodiment includes a frame unit 300 for holding three tray units 200 having a large lateral width, a frame unit 300 for holding two tray units 200 having the large lateral width, a frame unit 300 for holding three tray units 200 having a small lateral width, and a frame unit 300 for holding two tray units 200 having the small lateral width.

In the frame unit 300, surface fasteners 311, vertical link mechanism, are mounted on both sides of top surface and both sides of bottom surface of the main frames 310. At the center of the bottom surface of the main frame 310, a frame through-hole (not illustrated) which serves as a frame concave part is mounted. At the center of the top surface of the main frame 310, a protrusion part 314 which serves as a frame protrusion is mounted.

In the cigarette display apparatus 1000 of the embodiment, as shown in FIG. 5, when installing a plurality of frame units 300 having a same lateral width in the vertical direction, the plurality of frame units 300 are linked by the surface fasteners 311. At this time, the frame through-holes engage with the protrusion parts 314.

Note that the cigarette display apparatus 1000 is not only capable of housing the packs of cigarettes TP in the magazine units 100 attached by the tray unit 200 to the frame unit 300 as described in the above, but is also capable of housing the cartons of cigarettes TK on the tray unit 200 attached to the frame unit 300, while keeping the longitudinal direction thereof in a direction from front to back or from side to side. In other words, the cigarette display apparatus 1000 allows a plurality of modes of use of the frame units 300.

By freely combining the plurality of types of frame units 300 and the tray units 200 as described in the above, various patterns of the cigarette display apparatus 1000 may be configured for every commodity-selling shop CVS.

Once the cigarette display apparatus 1000 is configured using a plurality of types of frame unit 300 as described in the above, data relevant to display housing structure DIS corresponding to that is registered into data management apparatus 2100.

Since unit data is preliminarily prepared for every frame unit 300, the display housing structure DIS and the commodity display position PKS of the cigarette display apparatus 1000 may be simply and certainly registered into the data management apparatus 2100.

In addition, the display staff actually displays the packs of cigarettes TP and the cartons of cigarettes TK on the above-described cigarette display apparatus 1000, temporarily holds the data relevant to the commodity display layout PDF in the portable processing terminal 2200, and then registers it into the data management apparatus 2100.

A computer program of the thus-configured portable processing terminal 2200 is, for instance, configured to make the portable processing terminal 2200 execute an identification acquisition process for acquiring, when the display staff displays the pack of cigarettes TP and so forth on the cigarette display apparatus 1000, correspondent commodity identification data TID and position identification data SID; a display holding process for holding the acquired commodity identification data TID and the position identification data SID in a correlated manner; an alert acquisition process for acquiring the commodity display alert TDA, together with the commodity identification data TID, from the data management apparatus 2100; an alert holding process for holding the acquired commodity display alert TDA together with the commodity identification data TID; an alert confirmation process for confirming whether the commodity identification data TID, acquired together with the position identification data SID when the display staff displays the pack of cigarettes TP and so forth on the cigarette display apparatus 1000, matches the commodity identification data TID stored together with the commodity display alert TDA; and an alert notifying process for outputting a predetermined commodity display alert TDA if both of the commodity identification data TID match.

On the other hand, a computer program of the data management apparatus 2100 is configured to make the data management apparatus 2100 execute a display acquisition process for acquiring the commodity identification data TID and the position identification data SID, which are collected from the cigarette display apparatus 1000, through the portable processing terminal 2200; an alert memory process for storing a commodity display alert TDA relevant to a commodity display layout PDF, together with at least a part of the commodity identification data TID; and an alert provision process for providing the commodity display alert TDA to the portable processing terminal 2200, through which the commodity identification data TID and the position identification data SID are acquired, together with the commodity identification data TID.

Based on the above-described configuration, the cigarette display apparatus 1000 of this embodiment allows arbitrary combinations of four types of frame units 300, four types of tray units 200, and two types of magazine units 100 depending on needs.

Because of this, the cigarette display apparatus 1000 of the embodiment is allowed for various modifications in the overall shape to be suitable for an installation space. Therefore, it is possible to use a space effectively. Especially, since there are narrow frame units 300 for holding three columns of packs of cigarettes TP and wide frame units 300 for holding five columns of packs of cigarettes TP, the cigarette display apparatus 1000 can be set up so as to fit various width installation spaces.

Further, since there are tall frame units 300 for holding three rows of packs of cigarettes TP, and short frame units 300 for holding two rows of packs of cigarettes TP, the cigarette display apparatus 1000 can be set up so as to fit various height installation spaces.

Upon configuration of the cigarette display apparatus 1000 uniquely at the commodity-selling shop CVS as described in the above, a display housing structure DIS and a commodity display position PKS of the cigarette display apparatus 1000 are registered as display system data into the data management apparatus 2100.

The present applicant was invented a data processing apparatus which simulates and supports configuration of the above-described cigarette display apparatus 1000, and was filed as Japanese Patent Application Nos. 2007-053718, 2007-053719, 2007-053725, and 2007-053726. Contents of these applications are incorporated hereinto by reference.

Once the configuration of the cigarette display apparatus 1000 and data registration are completed as described in the above, the packs of cigarettes TP, the brick packs of cigarettes BP and the cartons of cigarettes TK are displayed thereon to be sold.

While a shop clerk of the commodity-selling shop CVS may occasionally display the display commodities in some cases, the packs of cigarettes TP may be displayed by a display staff sent from the commodity supply company TSM in other cases.

In this case, a dedicated display staff brings the packs of cigarettes TP, cartons of cigarettes TK, brick packs of cigarettes BP and so forth, displays them on the cigarette display apparatus 1000, and enters the commodity display layout PDF to the portable processing terminal 2200.

More specifically, in the cigarette display apparatus 1000 of this embodiment, the position identification data SID acquired, similarly to the commodity identification data TID of the pack of cigarettes TP as described in the above, through the portable processing terminal 2200 is assigned for every commodity display position PKS in a form of barcode image.

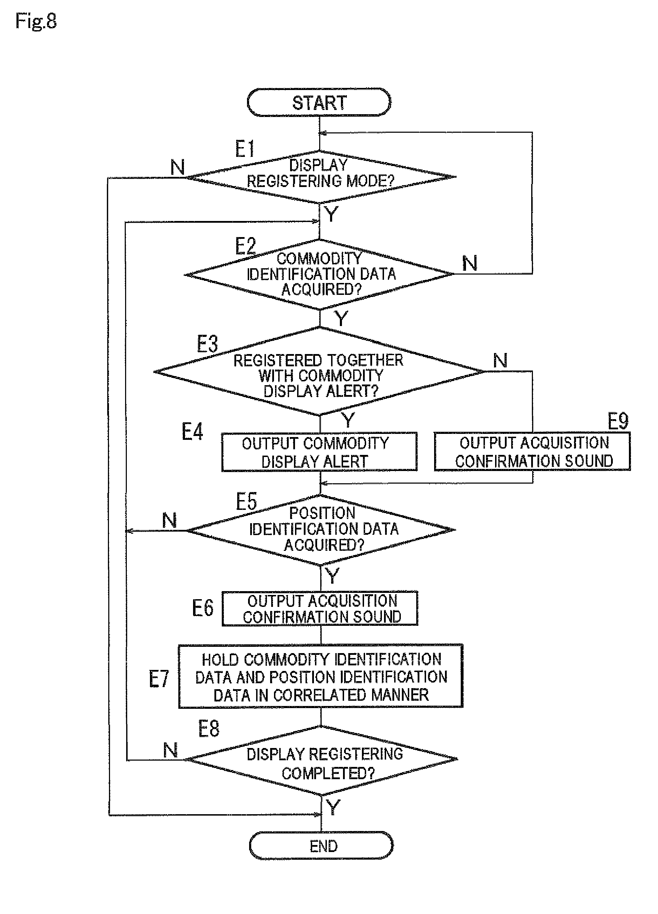

Accordingly, when the display staff of the commodity supply company TSM visits the commodity-selling shop CVS and displays the packs of cigarettes TP and so forth on the cigarette display apparatus 1000, he or she sets an operation mode of the portable processing terminal 2200 to a display registering mode typically by a predetermined operation, as illustrated in FIG. 8 (step E1-Y).

In this state, first, the display staff makes the portable processing terminal 2200 acquire commodity identification data TID of the packs of cigarettes TP, the cartons of cigarettes TK, the brick packs of cigarettes BP and so forth, desired to be displayed on the cigarette display apparatus 1000, typically by optical scanning using an I/F unit 2204 (step E2-Y).

In the case where the commodity identification data TID has already been registered together with the commodity display alert TDA from the data management apparatus 2100 of the commodity supply company TSM, it is confirmed whether the data match the acquired commodity identification data TID, as detailed later (step E3).

If both of the commodity identification data TID do not match, or if the commodity identification data TID has not been registered together with the commodity display alert TDA (step E3-N), an acquisition confirmation sound which indicates the success of acquiring of the commodity identification data TID is output (step E9).

Upon confirmation of the acquisition, the display staff displays the packs of cigarettes TP and so forth at a desired commodity display position PKS on the cigarette display apparatus 1000, similarly to the conventional way. In this process, the display staff allows the portable processing terminal 2200 to acquire position identification data SID, assigned to the commodity display position PKS where the packs of cigarettes TP and so forth were displayed, typically by optical scanning using the I/F unit 2204 (step E5-Y).

Now an acquisition confirmation sound which indicates the success of acquiring the position identification data SID is output (step E6). Then, the commodity identification data TID of the above-described packs of cigarettes TP and so forth and the position identification data SID of the commodity display position PKS are held in a correlated manner (step E7).

If it is desired to change the packs of cigarettes TP already displayed at the commodity display position PKS and data registration therefor has been completed, it may be good enough to re-execute acquisition of the commodity identification data TID and the position identification data SID (steps E2 to E6), and thereby the position identification data SID of the commodity display position PKS, which have preliminarily been held in a correlated manner, is updated by overwrite saving (step E7).

When completing the display of necessary packs of cigarettes TP, necessary cartons of cigarettes TK, necessary brick packs of cigarettes BP and so forth in at all commodity display positions PKS, the completion of task is input to the portable processing terminal 2200 typically by a predetermined operation (step E8-Y).

In the case where the commodity identification data TID has not been registered together with the commodity display alert TDA, or in the case where the commodity identification data TID already registered together with the commodity display alert TDA does not match the commodity identification data TID acquired from the displayed packs of cigarettes TP and so forth as described in the above, the packs of cigarettes TP and so forth may be displayed at the display staff's will, similarly to the conventional way.

The display staff, who finished the operation of displaying commodities such as packs of cigarettes TP and data registration to the portable processing terminal 2200, goes from the commodity-selling shop CVS back to the commodity supply company TSM.

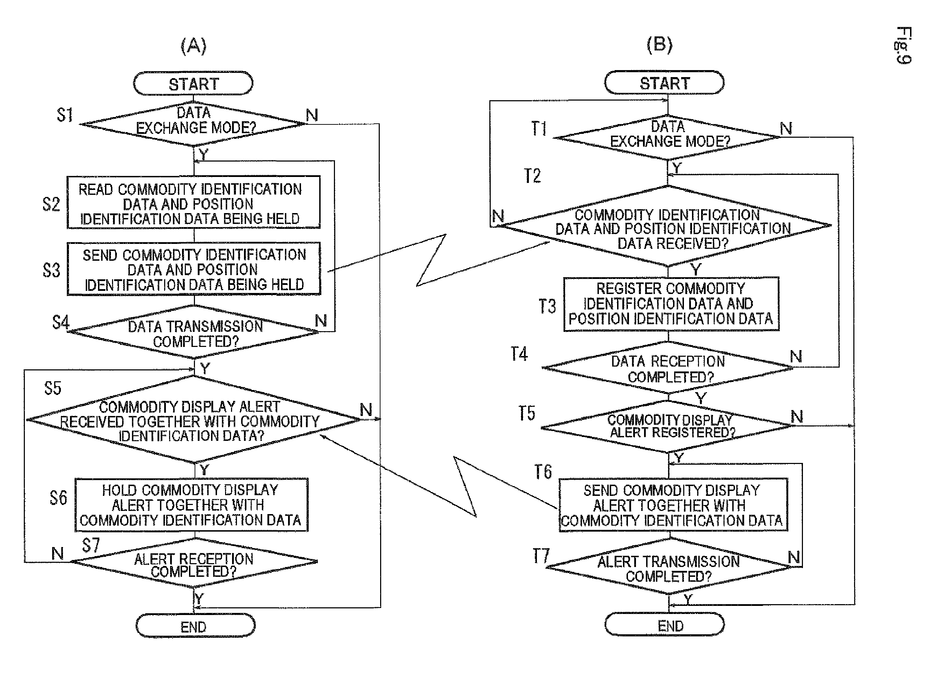

The display staff then connects the portable processing terminal 2200 and the data management apparatus 2100, for example, as illustrated in FIG. 9(A) and FIG. 9(B), by infrared communication between the I/F units 2204, 2128 based on a predetermined operation, and sets the operation mode to data exchange mode (steps S1-Y, T1-Y). FIG. 9(A) is a flow chart illustrating a data processing method in the data exchange mode with the data management apparatus in the portable processing terminal. FIG. 9(B) is a flow chart illustrating a data processing method in the data exchange mode with the portable processing terminal in the data management apparatus.

The portable processing terminal 2200 then reads the commodity identification data TID and the position identification data SID, having been held in a correlated manner in the above-described operation for displaying commodities (step S2), and sends them to the data management apparatus 2100 (step S3).

Upon reception of the commodity identification data TID and the position identification data SID from the portable processing terminal 2200 as described in the above (step T2-Y), the data management apparatus 2100 then stores the thus-received commodity identification data TID and the registered position identification data SID in a correlated manner (step T3).

The portable processing terminal 2200 sends the commodity identification data TID and the position identification data SID of the packs of cigarettes TP and so forth displayed at all commodity display positions PKS on a single cigarette display apparatus 1000 as described in the above (steps S2 to S4-Y).

Accordingly, the data management apparatus 2100 will finally have the commodity identification data TID and the position identification data SID of the packs of cigarettes TP and so forth displayed at all commodity display positions PKS on a single cigarette display apparatus 1000 acquired and entered thereto (steps T2 to T4-Y).

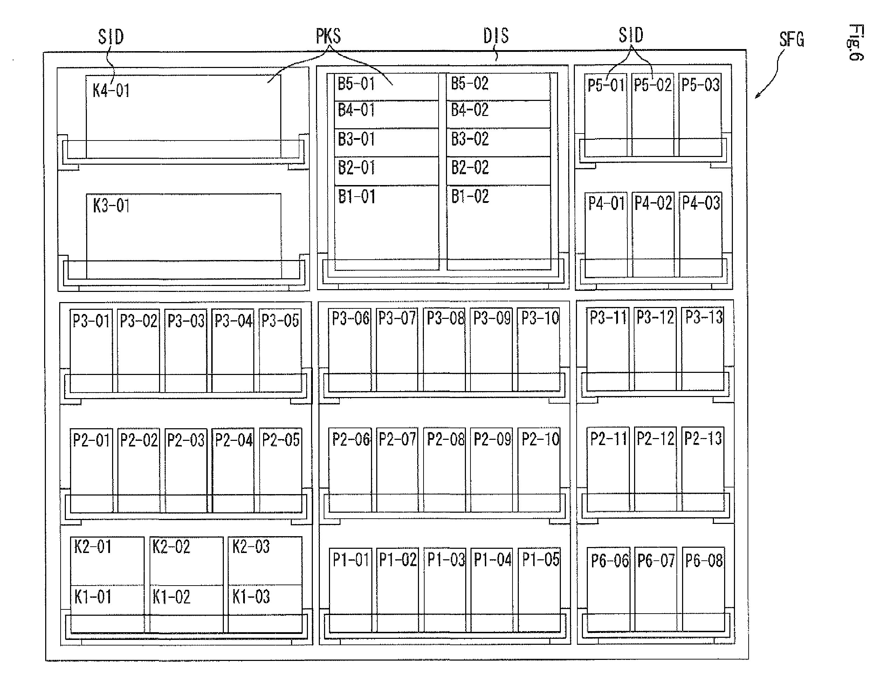

In the data management apparatus 2100, the display housing structure DIS of the cigarette display apparatus 1000 has been registered as the commodity display position PKS and position identification data SID as described in the above, therefore, an apparatus front view image SFG can be output on a screen as illustrated in FIG. 6.

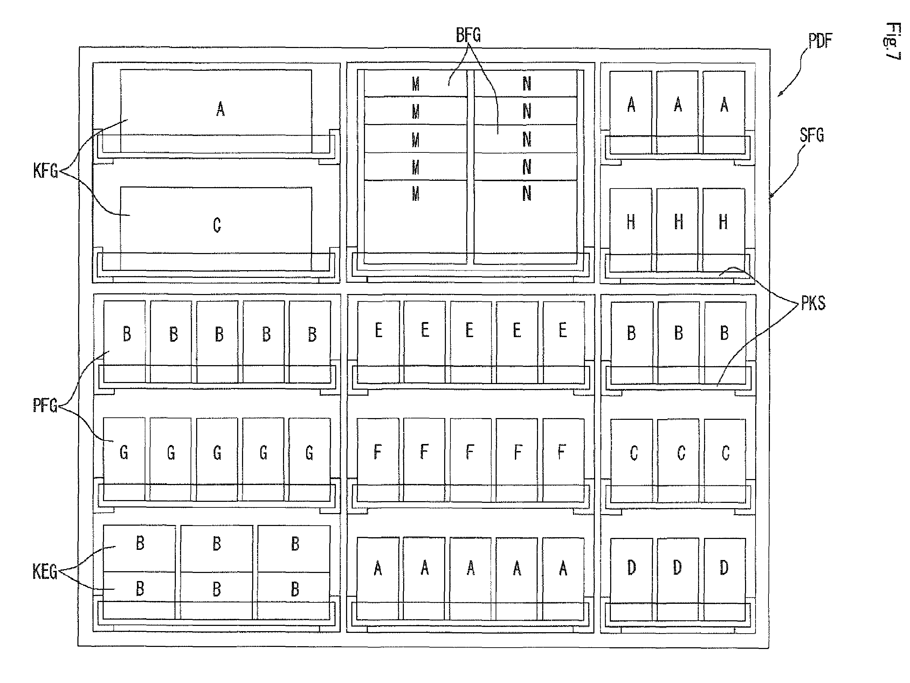

When the packs of cigarettes TP and so forth are actually displayed at the commodity display positions PKS on the cigarette display apparatus 1000, and the commodity identification data TID and the position identification data SID are registered as a commodity display layout PDF as described in the above, the data management apparatus 2100 may output surface images PFG of the packs of cigarettes TP, surface images KFG of the cartons of cigarettes TK, end surface images KEG of the cartons of cigarettes TK and surface images BFG of the brick packs of cigarettes BP, at the commodity display positions PKS in the apparatus front view image SFG as illustrated in FIG. 7.

Accordingly, in the commodity supply company TSM, the commodity display layout PDF on the cigarette display apparatus 1000 at the commodity-selling shop CVS may visually be confirmed and examined, similarly to the conventional way.

On the other hand, in the commodity supply company TSM, commodity sales data of the packs of cigarettes TP and so forth are also registered to the data management apparatus 2100 (not illustrated). Accordingly, it is also possible to examine propriety of the commodity display layout PDF which is output on the screen, referring to the commodity sales data and so forth of the packs of cigarettes TP.

Therefore, for example, the commodity display alert TDA may be registered to the data management apparatus 2100 depending on needs, for the commodity identification data TID of the packs of cigarettes TP which are new products and therefore need special attention to the commodity display position PKS.

When the commodity display layout PDF is reported between the portable processing terminal 2200 and the data management apparatus 2100 as a routine operation in this situation as described in the above (steps S1 to S4, T1 to T4), the data management apparatus 2100 then returns the commodity display alert TDA, having been registered as described in the above, together with the correspondent commodity identification data TID to the portable processing terminal 2200 (steps T5-Y, T6).

The portable processing terminal 2200 holds the thus-received commodity display alert TDA together with the correspondent commodity identification data TID (steps S5-Y, S6). Upon completion of transmission of the commodity display alert TDA (steps T7-Y, S7-Y), the portable processing terminal 2200 will be used again in the operation for displaying commodities on the cigarette display apparatus 1000 at the commodity-selling shop CVS.

In this case, as described in the above, when the display staff of the commodity supply company TSM visits the commodity-selling shop CVS and displays the packs of cigarettes TP and so forth on the cigarette display apparatus 1000, the display staff sets the portable processing terminal 2200 to the display registering mode, as illustrated in FIG. 8 (step E1-Y).

In this state, the display staff allows the portable processing terminal 2200 to acquire the commodity identification data TID of the desired packs of cigarettes TP and so forth to be displayed on the cigarette display apparatus 1000 (step E2-Y).

Then, as described in the above, whether the commodity identification data TID, having been registered together with the commodity display alert TDA in the data management apparatus 2100 of the commodity supply company TSM, match the commodity identification data TID acquired from the displayed packs of cigarettes TP and so forth (step E3).

If both of the commodity identification data TID do not match (step E3-N), an acquisition confirmation sound which indicates the success of acquiring the commodity identification data TID is output (step E9), so that the display staff who confirmed the sound then displays the packs of cigarettes TP and so forth at the desired commodity display positions PKS on the cigarette display apparatus 1000, similarly to the conventional way.

On the other hand, if both of the commodity identification data TID matched (step E3-Y), the acquisition confirmation sound is output in a form modified into the commodity display alert TDA (step E4). Accordingly, the display staff may immediately recognize that the packs of cigarettes TP and so forth are necessary products to be displayed especially.

For example, the display staff then displays the packs of cigarettes TP at a commodity display position PKS at the center top portion of the cigarette display apparatus 1000 where good sales may be expected. Also in this process, the display staff allows the portable processing terminal 2200 to acquire the position identification data SID of the commodity display position PKS where the packs of cigarettes TP and so forth were displayed (step E5-Y).

As described in the above, in the case where the commodity identification data TID is registered together with the commodity display alert TDA, and the commodity identification data TID matches the commodity identification data TID acquired from the displayed packs of cigarettes TP and so forth, the packs of cigarettes TP and so forth will be displayed by the display staff with special consideration, unlike the conventional way.

The display staff, who finished display of necessary packs of cigarettes TP, necessary cartons of cigarettes TK, and necessary brick packs of cigarettes BP at all commodity display positions PKS by repeating the above-described operations, again goes from the commodity-selling shop CVS back to the commodity supply company TSM.

Then, as described in the above, the commodity display layout PDF accumulated in the portable processing terminal 2200 is reported to the data management apparatus 2100 (steps S1 to S4, T1 to T4). The data management apparatus 2100 then outputs, on a screen, the apparatus front view image SFG which contains the surface images PFG of the packs of cigarettes TP and so forth arranged at the commodity display positions PKS, as illustrated in FIG. 7.

In this process, since the actual commodity display layout PDF on the cigarette display apparatus 1000 can be confirmed as described in the above, so that the propriety, for example, of the commodity display position PKS of the packs of cigarettes TP, for which the commodity display alert TDA was issued, can be also confirmed.

In the display support system 2000 of this embodiment, as described in the above, when the display staff displays the packs of cigarettes TP and so forth on the cigarette display apparatus 1000, data relevant to a correlation between the commodity identification data TID and the position identification data SID is collected by the portable processing terminal 2200, and provided to the data management apparatus 2100.

Accordingly, the data management apparatus 2100 is now enabled to confirm and examine the commodity display layout PDF on the cigarette display apparatus 1000. As a consequence, it is now possible, for example, to set the commodity display alert TDA to the commodity identification data TID of the packs of cigarettes TP for which the commodity display layout PDF was judged as inappropriate.

Then, when the data relevant to the commodity display layout PDF is provided from the portable processing terminal 2200 to the data management apparatus 2100, the commodity display alert TDA is provided together with at least a part of commodity identification data TID from the data management apparatus 2100 to the portable processing terminal 2200.

If the display staff in this state allows the portable processing terminal 2200 to acquire the commodity identification data TID together with the position identification data SID, when the display staff displays the packs of cigarettes TP and so forth on the cigarette display apparatus 1000, the commodity display alert TDA is output on a screen depending on the commodity identification data TID.

As a consequence, since the commodity display alert TDA is output for a specific commodity identification data TID when the data relevant to a commodity display layout PDF is collected by the portable processing terminal 2200, similarly to the conventional way, so that it is enabled, for example, to alert the packs of cigarettes TP which should be displayed at the center top portion of the cigarette display apparatus 1000.

In this way, propriety of the commodity display layout PDF judged in the back-end can be notified during the working time to the job site where the cigarette display apparatus 1000 is placed, and can be reflected thereto. Note that the packs of cigarettes TP practically includes those whose sales are largely affected by the commodity display position PKS, and those whose sales are not so largely affected.

In this case, improvement in the sales may be expected in the whole the cigarette display apparatus 1000, by arranging the products whose sales are largely affected at the commodity display position PKS where good sales may be expected, and by arranging the products whose sales are not so largely affected at the commodity display position PKS where poor sales may be expected.

It is also possible to preferentially arrange the packs of cigarettes TP of new products and so forth at the commodity display position PKS where good sales may be expected, to observe the sales for every type of commodity, and to finally judge an appropriate commodity display position PKS.

The above-described commodity display alert TDA is provided from the data management apparatus 2100 to the portable processing terminal 2200, when the data relevant to the commodity display layout PDF collected by the portable processing terminal 2200 is provided to the data management apparatus 2100, similarly to the conventional way.

Accordingly, any dedicated operation for registering the commodity display alert TDA from the data management apparatus 2100 to the portable processing terminal 2200 is not necessary, and thereby the always latest commodity display alert TDA can automatically be registered in the portable processing terminal 2200 without making the display staff conscious.

In addition, the portable processing terminal 2200 outputs the acquisition confirmation sound when the commodity identification data TID and the position identification data SID are acquired by the identification acquisition unit 2211. The alert notifying unit 2216 modifies the acquisition confirmation sound as the commodity display alert TDA.

Accordingly, any dedicated device for outputting the commodity display alert TDA is not necessary, and thereby the display staff can exactly recognize the commodity display alert TDA as a modification made on the acquisition confirmation sound which may otherwise be audible normally during the operation.

The data management apparatus 2100 also generates the data relevant to the commodity display layout PDF using the commodity identification data TID and the position identification data SID collected from the cigarette display apparatus 1000, and outputs the thus-generated commodity display layout PDF on the screen.

Moreover, the data management apparatus 2100 allows operation for entering the commodity display alert TDA for every pack of cigarettes TP and so forth of the commodity display layout PDF output on the screen with the commodity sales data reflected thereto, and the alert memory unit 2132 stores the thus-entered commodity display alert TDA together with the correspondent commodity identification data TID.

Accordingly, an actual commodity display layout PDF made by the display staff can be confirmed at a glance on the screen, and thereby the commodity display alert TDA can be appropriately be set based on the analysis.

In addition, the portable processing terminal 2200 optically reads the commodity identification data TID and the position identification data SID given in a form of barcode image, from the packs of cigarettes TP and so forth and the cigarette display apparatus 1000, in a non-contact manner.

Accordingly, the commodity identification data TID and the position identification data SID can be simply and promptly acquired from the packs of cigarettes TP and so forth and the cigarette display apparatus 1000. In particular, since the packs of cigarettes TP and so forth at present are generally mounted with a barcode image, there is no need of additionally mounting the barcode image to the packs of cigarettes TP and so forth for the purpose of embodying the present invention.

Moreover, as described in the above, the portable processing terminal 2200 optically communicates with the I/F unit 2128 of the data management apparatus 2100, using the I/F unit 2204 which optically reads the commodity identification data TID and the position identification data SID from the packs of cigarettes TP and so forth and from the cigarette display apparatus 1000.

Accordingly, a device for acquiring the commodity identification data TID and the position identification data SID is configured to serve as a device for communicating with the data management apparatus 2100. As a consequence, the portable processing terminal 2200 can be simplified in the structure thereof and reduced in size and weight.

Note that the present invention is not limited to this embodiment, while allowing various modifications without departing from the point thereof. For example, the above-described embodiment represents only the case where the commodity display alert TDA is set for every commodity such as the packs of cigarettes TP and so forth.

Alternatively, the alert memory unit 2132 of the data management apparatus 2100 may store at least a part of the commodity display alert TDA together with the commodity identification data TID and the position identification data SID; the alert provision unit 2133 may provide at least a part of the commodity display alert TDA to the portable processing terminal 2200 together with the commodity identification data TID and the position identification data SID; the alert holding unit 2214 of the portable processing terminal 2200 may hold the acquired commodity display alert TDA together with the commodity identification data TID and the position identification data SID; the alert confirmation unit 2215 may confirm whether the acquired position identification data SID and the acquired commodity identification data TID match the position identification data SID and the commodity identification data TID held together with the commodity display alert TDA; and the alert notifying unit 2216 may output the commodity display alert TDA if both of the position identification data SID and the commodity identification data TID match.

In this case, the commodity display alert TDA is set to the portable processing terminal 2200 together with the position identification data SID and the commodity identification data TID, and the commodity display alert TDA is output if both of the position identification data SID and the commodity identification data TID match.

Now, it is therefore possible to manage and alert combinations of the display commodities such as packs of cigarettes TP and so forth, and the commodity display position PKS. Accordingly, it is possible to prevent any incorrect operation such that the commodity display alert TDA is output when the display commodities, such as the packs of cigarettes TP, are displayed at an irrelevant commodity display position PKS.

By providing such commodity display alert TDA alternatively in a form of guidance message or the like, it is possible to desirably prevent any incorrect operations such that the brick packs of cigarettes BP desired to be displayed at the center upper portion are undesirably displayed at the side lower portion, and such that the cartons of cigarettes TK desired to be displayed at the side lower portion are undesirably displayed at the center upper potion.

For simplicity of explanation, the above-described embodiment represented only the case where a single commodity-selling shop CVS has a single cigarette display apparatus 1000 installed therein, and the commodity display alert TDA is output by managing only the commodity display layout PDF,.

However, in practice, there may be a case where a single display staff visits a large number of commodity-selling shops CVS having various cigarette display apparatuses (not illustrated) installed therein, within a day to perform the operation for displaying commodities (not illustrated).

In this case, the cigarette display apparatus 1000 may be assigned with apparatus identification data for every apparatus type which differs at least in the commodity display layout PDF; the identification acquisition unit 2211 of the portable processing terminal 2200 may acquire, for every apparatus identification data, correspondent commodity identification data TID and position identification data SID; the display holding unit 2212 may hold, for every apparatus identification data, the acquired commodity identification data TID and the acquired position identification data SID in a correlated manner; the display acquisition unit 2131 of the data management apparatus 2100 may acquire the collected commodity identification data TID and the position identification data SID from the portable processing terminal 2200; the alert memory unit 2132 may store, for every apparatus identification data, the commodity display alert TDA together with the commodity identification data TID and the position identification data SID; the alert provision unit 2133 may provide, for every apparatus identification data, at least a part of the commodity display alert TDA to the portable processing terminal 2200, together with the commodity identification data TID and the position identification data SID; the alert holding unit 2214 of the portable processing terminal 2200 may hold, for every apparatus identification data, the acquired commodity display alert TDA together with the commodity identification data TID and the position identification data SID; the alert confirmation unit 2215 may confirm whether the acquired apparatus identification data and the acquired position identification data SID and the acquired commodity identification data TID match the apparatus identification data and the position identification data SID and the commodity identification data TID which are held together with the commodity display alert TDA; and the alert notifying unit 2216 may output the commodity display alert TDA if all of the apparatus identification data and the position identification data SID and the commodity identification data TID match (not illustrated).

In this case, data showing which packs of cigarettes TP and so forth are displayed at which commodity display position PKS on which cigarette display apparatus 1000 may be managed, and the commodity display alert TDA may be output.

Accordingly, it is possible to prevent any incorrect operations such that the commodity display alert TDA is output when the display commodities, such as the packs of cigarettes TP, are displayed on an irrelevant cigarette display apparatus 1000 or at an irrelevant commodity display position PKS.

The above-described embodiment illustrated the case where the commodity display layout PDF collected by the portable processing terminal, 2200 is output on the screen of the data management apparatus 2100 so as to allow a management staff to set the commodity display alert TDA at the management staff's request.

However, the data management apparatus 2100 may further include an alert generation unit which generates the commodity display alert TDA for at least every part of the commodity identification data TID corresponding to the commodity display layout PDF with the commodity sales data reflected therein, and the alert memory unit 2132 may store the generated commodity display alert TDA together with the commodity identification data TID.

In this case, since the commodity display alert TDA is automatically generated from the commodity sales data and the commodity display layout PDF according to a predetermined algorithm, so that operation load, for example, of the management staff can be reduced.

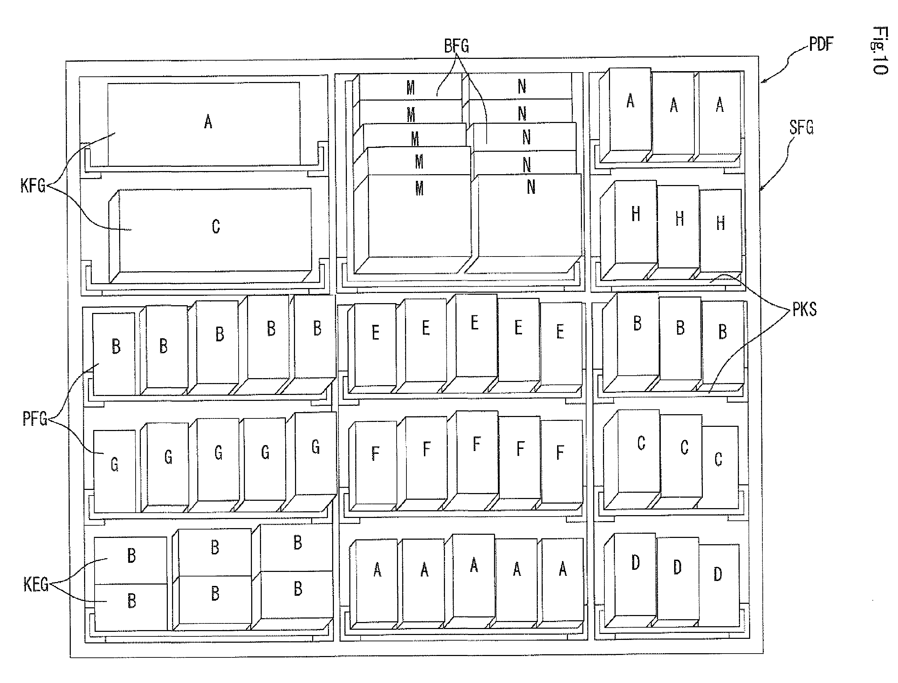

Alternatively, as illustrated in FIG. 10, the data management apparatus 2100 outputs the commodity display layout PDF, with the commodity sales data reflected therein as described in the above, on a screen in a form of quasi-three-dimensional graph or the like, thereby the management staff may intuitively set the commodity display alert TDA based on the image on the screen.

The above-described embodiment also represented the case where the commodity identification data TID and the position identification data SID are given in a form of barcode image to the packs of cigarettes TP and so forth and the cigarette display apparatus 1000, and the portable processing terminal 2200 optically reads them using the I/F unit 2204 which serves as a barcode reader, assuming its immediate feasibility on the packs of cigarettes TP and so forth at present.

Alternatively, each of the display commodities, such as the packs of cigarettes TP, may be mounted with an RFID chip having the commodity identification data TID stored therein, the commodity display apparatus may have the RFID chip, having the position identification data SID stored therein, mounted for every commodity display position PKS, and the portable processing terminal may acquire the commodity identification data and the position identification data from the RFID chips of the display commodities, and the commodity display apparatus, using the RFID reader (not illustrated).

While mounting of the RFID chips onto the packs of cigarettes TP and so forth is under discussion, not practiced yet, but is planned for the future. Accordingly, when the packs of cigarettes TP and so forth come to have the RFID chip mounted thereon, it may be enough to mount the RFID chip also onto the cigarette display apparatus as described in the above, and to mount the RFID reader onto the portable processing terminal (not illustrated).

Again in this case, it is preferable to mount the RFID chip onto a price card attached to the front face of the cigarette display apparatus 1000, or onto a card holder thereof. The RFID reader may, however, read data in all of a plurality of RFID chips which are located within a predetermined distance.

For this reason, a tip for avoiding erroneous detection of the adjacent RFID chips may be necessary when the RFID chips are mounted on the packs of cigarettes TP and so forth and the cigarette display apparatus 1000, and the data therein is detected by the RFID reader of the portable processing terminal as described in the above.

It is apparent that the above-described embodiment and a plurality of modified examples may be combined so far as the substance of which will not contradict with each other. While the above-described embodiment and the modified examples specifically explained the structures and so forth of the individual components, the structures and so forth may be modified in various ways so far as the present invention may remain satisfied.

## Claims

1. A display support system comprising:
a commodity display apparatus that displays display commodities to be sold to end users at a commodity-selling shop;
a data management apparatus that manages data of said display commodities which are supplied to said commodity-selling shop at a back-end such as a commodity supply company; and
a portable processing terminal that is carried by a display staff who moves between said back-end and said commodity-selling shop, and is used for collecting data relevant to a commodity display layout on said commodity display apparatus, and for data registration to said data management apparatus, wherein:
said display commodities are assigned, at least for every type of commodity, with commodity identification data which is managed by said data management apparatus and acquired through said portable processing terminal,
said commodity display apparatus is assigned, for every position thereof where said display commodities are displayed, with position identification data which is acquired through said portable processing terminal,
said portable processing terminal includes:
an identification acquisition unit that acquires, when said display staff displays said display commodities on said commodity display apparatus, correspondent commodity identification data and position identification data; and
a display holding unit that holds said acquired commodity identification data and said acquired position identification data in a correlated manner;
said data management apparatus includes:
a display acquisition unit that acquires said commodity identification data and said position identification data, which are collected from said commodity display apparatus, through said portable processing terminal;
an alert memory unit that stores a commodity display alert relevant to a commodity display layout, together with at least a part of said commodity identification data; and
an alert provision unit that provides said commodity display alert to said portable processing terminal, through which said commodity identification data and said position identification data are acquired, together with said commodity identification data;
said portable processing terminal further includes:
an alert acquisition unit that acquires said commodity display alert, together with said commodity identification data, from said data management apparatus;
an alert holding unit that stores said acquired commodity display alert together with said commodity identification data;
an alert confirmation unit that confirms whether said commodity identification data, acquired together with said position identification data when said display staff displays said display commodities on said commodity display apparatus, matches said commodity identification data stored together with said commodity display alert; and
an alert notifying unit that outputs a predetermined commodity display alert if both of said commodity identification data match.

2. The display support system according to Claim 1, wherein:
said alert memory unit of said data management apparatus stores at least a part of said commodity display alert together with said commodity identification data and said position identification data;
said alert provision unit provides at least a part of said commodity display alert to said portable processing terminal together with said commodity identification data and said position identification data;
said alert holding unit of said portable processing terminal holds said acquired commodity display alert together with said commodity identification data and said position identification data;
said alert confirmation unit confirms whether said acquired position identification data and said acquired commodity identification data match said position identification data and said commodity identification data held together with said commodity display alert; and
said alert notifying unit outputs said commodity display alert if both of said position identification data and said commodity identification data match.

3. The display support system according to Claim 2, wherein:
said commodity display apparatus is assigned with apparatus identification data, at least for every apparatus type which differs in said commodity display layout;
said identification acquisition unit of said portable processing terminal acquires, for every apparatus identification data, correspondent commodity identification data and position identification data;
said display holding unit holds, for every apparatus identification data, said acquired commodity identification data and said position identification data in a correlated manner;
said display acquisition unit of said data management apparatus acquires said collected commodity identification data and said collected position identification data from said portable processing terminal;
said alert memory unit stores, for every apparatus identification data, said commodity display alert together with said commodity identification data and said position identification data;
said alert provision unit provides, for every apparatus identification data, at least a part of said commodity display alert to said portable processing terminal, together with said commodity identification data and said position identification data;
said alert holding unit of said portable processing terminal holds, for every said apparatus identification data, said acquired commodity display alert together with said commodity identification data and said position identification data;
said alert confirmation unit confirms whether said acquired apparatus identification data, said position identification data and said commodity identification data match said apparatus identification data, said position identification data and said commodity identification data which are held together with said commodity display alert; and
said alert notifying unit outputs said commodity display alert if all of said apparatus identification data and said position identification data and said commodity identification data match.

4. The display support system according to any one of Claims 1 to 3, wherein
said portable processing terminal further includes a confirmation notifying unit that outputs an acquisition confirmation sound when said commodity identification data and said position identification data are acquired by said identification acquisition unit, and said alert notifying unit modifies said acquisition confirmation sound as said commodity display alert.

5. The display support system according to any one of Claims 1 to 4, wherein
said data management apparatus further includes a display generation unit that generates data relevant to said commodity display layout from said commodity identification data and said position identification data which are collected from said commodity display apparatus; and
a display layout outputting unit that outputs said commodity display layout based on said generated data on a screen.

6. The display support system according to Claim 5, wherein
said data management apparatus further includes a sales acquisition unit that acquires commodity sales data for every commodity identification data and a sales reflection unit that reflects said acquired commodity sales data in said commodity display layout to be output on a screen.

7. The display support system according to Claim 6, wherein
said data management apparatus further includes an alert entering unit through which said commodity display alert is entered for every display commodity of said commodity display layout to be output on a screen with said commodity sales data reflected therein, and said alert memory unit stores said entered commodity display alert together with correspondent commodity identification data.

8. The display support system according to Claim 6, wherein
said data management apparatus further includes an alert generation unit that generates said commodity display alert for at least every part of said commodity identification data corresponding to said commodity display layout to be output on a screen with said commodity sales data reflected therein, and said alert memory unit stores said generated commodity display alert together with said commodity identification data.

9. The display support system according to any one of Claims 1 to 8, wherein
each of said display commodities is mounted with an RFID (Radio Frequency Identification) chip storing said commodity identification data,
said commodity display apparatus is mounted with an RFID chip, storing said position identification data, for every position where said display commodities are displayed, and
said portable processing terminal includes, as said identification acquisition unit, an RFID reader that acquires said commodity identification data and said position identification data from said RFID chips mounted on said display commodities and said commodity display apparatus.

10. A portable processing terminal of the display support system according to any one of Claims 1 to 9, the portable processing terminal comprising:
an identification acquisition unit that acquires correspondent commodity identification data and position identification data when said display staff displays said display commodities on said commodity display apparatus;
a display holding unit that holds said acquired commodity identification data and said acquired position identification data in a correlated manner;
an alert acquisition unit that acquires said commodity display alert, together with said commodity identification data, from said data management apparatus;
an alert holding unit that stores said acquired commodity display alert together with said commodity identification data;
an alert conformation unit that confirms whether said commodity identification data, acquired together with said position identification data when said display staff displays said display commodities on said commodity display apparatus, matches said commodity identification data stored together with said commodity display alert; and
an alert notifying unit that outputs a predetermined commodity display alert if broth of said commodity identification data match.

11. A data management apparatus of the display support system according to any one of Claims 1 to 9, the data management apparatus comprising:
a display acquisition unit that acquires said commodity identification data and said position identification data, which are collected from said commodity display apparatus, through said portable processing terminal;
an alert memory unit that stores a commodity display alert relevant to a commodity display layout, together with at least a part of said commodity identification data; and
an alert provision unit that provides said commodity display alert to said portable processing terminal, through which said commodity identification data and said position identification data are acquired, together with said commodity identification data.

12. A computer program of the portable processing terminal according to Claim 10, to make said portable processing terminal execute:
an identification acquisition process for acquiring, then the display staff displays said display commodities on said commodity display apparatus, correspondent commodity identification data and position identification data;
a display holding process for holding said acquired commodity identification data and said acquired position identification data in a correlated manner;
an alert acquisition process for acquiring said commodity display alert, together with said commodity identification data, from said data management apparatus;
an alert holding process for holding said acquired commodity display alert together with said commodity identification data;
an alert confirmation process for confirming whether said commodity identification data, acquired together with said position identification data when said display staff displays said display commodities on said commodity display apparatus, matches said commodity identification data stored together with said commodity display alert; and
an alert notifying process for outputting a predetermined commodity display alert if both of said commodity identification data match.

13. A computer program of the data management apparatus according to Claim 11, to make said data management apparatus execute:
a display acquisition process for acquiring said commodity identification data and said position identification data, which are collected from said commodity display apparatus, through said portable processing terminal;
an alert memory process for storing a commodity display alert relevant to a commodity display layout, together with at least a part of said commodity identification data; and
an alert provision process for providing said commodity display alert to said portable processing terminal, through which said commodity identification data and said position identification data are acquired, together with said commodity identification data.

14. A data processing method for the portable processing terminal according to Claim 10, the data processing method comprising:
an identification acquisition operation for acquiring, when said display staff displays said display commodities on said commodity display apparatus, correspondent commodity identification data and position identification data;
a display holding operation for holding said acquired commodity identification data and said acquired position identification data in a correlated manner;
an alert acquisition operation for acquiring said commodity display alert, together with said commodity identification data, from said data management apparatus;
an alert holding operation for holding said acquired commodity display alert together with said commodity identification data;
an alert confirmation operation for confirming whether said commodity identification data, acquired together with said position identification data when said display staff displays said display commodities on said commodity display apparatus, matches said commodity identification data stored together with said commodity display alert; and
an alert notifying operation for outputting a predetermined commodity display alert if both of said commodity identification data match.

15. A data processing method for the data management apparatus according to Claim 11, the data processing method comprising:
a display acquisition operation for acquiring said commodity identification data and said position identification data, which are collected from said commodity display apparatus, through said portable processing terminal;
an alert memory operation for storing a commodity display alert relevant to a commodity display layout, together with at least a part of said commodity identification data; and
an alert provision operation for providing said commodity display alert to said portable processing terminal, through which said commodity identification data and said position identification data are acquired, together with said commodity identification data.
